(19) Europäisches Patentamt
European Patent Office
Office européen des brevets

(11) EP 4 270 730 A1

(12) EUROPEAN PATENT APPLICATION

(43) Date of publication:
01.11.2023 Bulletin 2023/44

(21) Application number: 23165487.2

(22) Date of filing: 30.03.2023

(51) International Patent Classification (IPC):
H02J 50/12 (2016.01)        H02J 50/50 (2016.01)

(52) Cooperative Patent Classification (CPC):
H02J 50/12; H02J 50/50

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 27.04.2022 US 202217660944

(71) Applicant: SWR Technology Inc.
Fremont, CA 94539 (US)

(72) Inventors:
• HSIAO, Wenching
  Zhubei City, Hsinchu County (TW)
• SHAN, Shengming
  FREMONT, California (US)

(74) Representative: 2K Patentanwälte Blasberg Kewitz & Reichel
Partnerschaft mbB
Schumannstrasse 27
60325 Frankfurt am Main (DE)

(54) **EFFICIENT AND LOW PROFILE WIRELESS POWER TRANSFER SYSTEM**

(57) Systems for providing electrical power to a load device through wireless transmission are provided. A system (100) includes a power transmitting data unit (110), PTDU, and a power receiving data unit (130), PRDU. The PTDU is configured to receive an input power (Pin), and includes a first resonator (114). The first resonator (114) is configured to provide electromagnetic waves according to the input power (Pin). The PRDU (130) is connected to the load device (140). The PRDU (130) includes a second resonator (132) and a rectifier (134). The second resonator (132) is configured to receive the electromagnetic waves and provide the electrical power according to the electromagnetic waves. The rectifier (134) is configured to convert the electrical power into a DC power to the load device (140). The first resonator (114) includes a primary coil, and the second resonator includes a secondary coil and a component coupled in parallel or in series with the secondary coil.

FIG. 1A

**Description**

**BACKGROUND OF THE INVENTION**

**Field of the Invention**

The invention relates to electrical power delivery, and more particularly to a wireless power transfer system.

**Description of the Related Art**

Traditionally electrical power is delivered by physically connecting a device to an electrical grid. In recent years, a new system has been developed to deliver electrical power through electromagnetic induction. For wireless power transfer, a non-radiative technique is generally used, and the power is transferred over short distances by magnetic fields through inductive coupling, or through an electric field through capacitive coupling. The transmission of electrical power through electromagnetic induction involves two devices: one is an electromagnetic wave transmitter and other is an electromagnetic wave receiver. The electrical power is transmitted by the electromagnetic wave transmitter as an electromagnetic wave through the air or through another medium, and it is received and converted back into electrical power by the electromagnetic wave receiver. Each of the transmitter and the receiver includes a resonator operating at a certain frequency. The effective transmission of the power requires the frequencies used in the resonator in the transmitter and the resonator in the receiver to be the same or within a narrow band of each other.
This requirement of the operating frequencies to be the same or within a narrow band places a limitation on the wireless power transfer. Hence, it is imperative to devise a system that improves the wireless power transfer.

**BRIEF SUMMARY OF THE INVENTION**

Wireless power transfer systems are provided. An embodiment of a system for providing electrical power to a load device through wireless transmission is provided. The system includes a power transmitting data unit (PTDU) and a power receiving data unit (PRDU). The PTDU is configured to receive input power, and includes a first resonator. The first resonator is configured to provide electromagnetic waves according to the input power. The PRDU is connected to the load device. The PRDU includes a second resonator and a rectifier. The second resonator is configured to receive the electromagnetic waves and provide electrical power according to the electromagnetic waves. The rectifier is configured to convert the electrical power into a direct current (DC) power to the load device. The first resonator comprises a primary coil, and the second resonator comprises a secondary coil and a component coupled to the secondary coil. The secondary coil has a first impedance magnitude. When the component is connected between the secondary coil and the rectifier, a second impedance magnitude of the component is less than one-fifth the first impedance magnitude of secondary coil. When the component is connected in parallel with the secondary coil, the second impedance magnitude of the component is greater than five times the first impedance magnitude of secondary coil.
Moreover, an embodiment of a system for providing electrical power to a load device through wireless transmission is provided. The system includes a power transmitting data unit (PTDU), and a power receiving data unit (PRDU). The PTDU is configured to receive input power and includes a first resonator. The first resonator is configured to provide electromagnetic waves according to the input power. The PRDU is connected to the load device, and includes a second resonator. The second resonator is configured to receive the electromagnetic waves and provide electrical power according to the electromagnetic waves. The first resonator includes a resonator capacitor, and the second resonator is free of a capacitor.
A detailed description is given in the following embodiments with reference to the accompanying drawings.

**BRIEF DESCRIPTION OF DRAWINGS**

The invention can be more fully understood by reading the subsequent detailed description and examples with references made to the accompanying drawings, wherein:

FIG. 1A shows a wireless power transfer system according to some embodiments of the invention.
FIG. 1B shows a wireless power transfer system according to some embodiments of the invention.
FIG. 2 shows a schematic model for a wireless power transfer according to some embodiments of the invention.
FIG. 3 shows a schematic model for a wireless power transfer according to some embodiments of the invention.
FIG. 4 shows a wireless power transfer system according to some embodiments of the invention.
FIG. 5 shows a wireless power transfer system according to some embodiments of the invention.
FIG. 6 shows a wireless power transfer system according to some embodiments of the invention.

FIG. 7 shows a wireless power transfer system according to some embodiments of the invention.

## DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

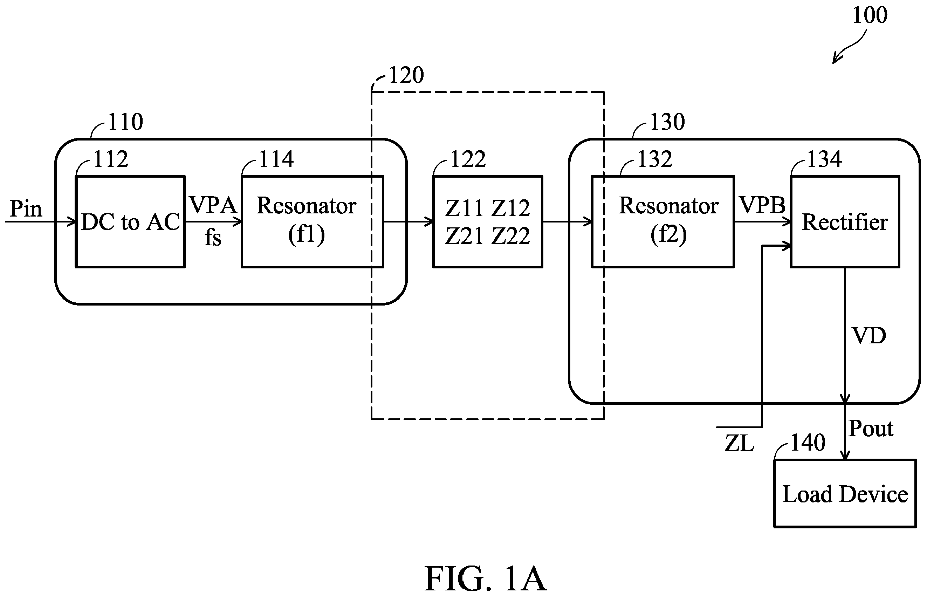

FIG. 1A shows a wireless power transfer system 100 according to some embodiments of the invention. The wireless power transfer system 100 includes a power transmitting data unit (PTDU) 110 and a power receiving data unit (PRDU) 130. The electrical power is transferred wirelessly from a power source (not shown) connected to the PTDU 110 to the PRDU 130 to which a load device 140 is connected.

The wireless power transfer system 100 can be implemented in various applications, operations and/or devices. For example, the wireless power transfer system 100 is used in smart home/office application, wearable devices, autonomous operation of unmanned systems (air, ground and sea), 5G fixed wireless access application, robotics charging operations, automotive applications, weatherproof power solution for IOT sensor in hazardous environment, electrical bike/motorcycle charging operations, electric vehicle (EV) charging operations and so on. For portable devices, such as smart phones, the PRDU 130 is implemented in the smart phones. For the load device 140, such as home appliances, automotive accessories (e.g., heating device, overhead display, safety system) and charging systems or factory machineries, the PRDU 130 may be separated from the load device 140 and the power may be transmitted through a wire or a cable from the PRDU 130 to the load device 140 (e.g., the home appliances).

In some embodiments, besides transferring the power to the load device 140, the data can also be exchanged through a data link between the load device 140 and the PRDU 130. The data from the load device 140 may be the identification data of the load device 140. The data may also be coming from the PRDU 130 and the data represent the status of wireless transfer (current/voltage drawn by the load device 140) from the PRDU 130. The PRDU 130 is configured to send data to the PTDU 110 and receive data from the PTDU 110. The data link between the PRDU 130 and the PTDU 110 is through wireless communication. One example of such wireless communication is through the ISM band (industrial, scientific, and medical radio band) and the data is transferred through out-of-band communication. It is understood that other communication protocol may also be used for the communication between the PTDU 110 and the PRDU 130.

In the wireless power transfer system 100, the PTDU 110 is configured to receive the input power Pin from a power source (not shown) and transmit the power Pin through electromagnetic waves to the PRDU 130. The PTDU 110 includes a direct current (DC) to alternating current (AC) power converter 112 and a resonator 114. In such embodiment, the input power Pin is the DC power signal. In some embodiments, the input power Pin is the AC power signal. The DC-to-AC power converter 112 is configured to convert the input power Pin into the signal VPA, so as to drive the resonator 114. In such embodiment, the signal VPA is an AC signal. The resonator 114 is configured to receive the signal VPA and generate electromagnetic waves in response to the signal VPA. In order to simplify the description, the circuits and the components within the PTDU 110 regarding the data (e.g., power control information and user data) exchanged between the PTDU 110 and the PRDU 130 are omitted.

The PRDU 130 is configured to receive electrical power through electromagnetic waves from the PTDU 110 and provide an output power Pout to the load device 140. The PRDU 130 includes a resonator 132 and a rectifier 134. The resonator 132 is configured to receive and convert the electromagnetic waves into the signal VPB. In such embodiment, the signal VPB is an AC signal. The rectifier 134 is configured to convert the signal VPB into a DC power (or voltage) VD. The PRDU 130 is configured to provide the DC power VD as the output power Pout to the load device 140. Furthermore, the output power Pout may be used directly by the load device 140 or may be used to charge a storage unit inside the load device 140. Furthermore, the load impedance ZL represents the equivalent impedance seen at input of the rectifier 134, e.g., the input impedance looking into the rectifier 134. In order to simplify the description, the circuits and the components within the PRDU 130 regarding the data (e.g., power control information and user data) exchanged between the PTDU 110 and the PRDU 130 are omitted.

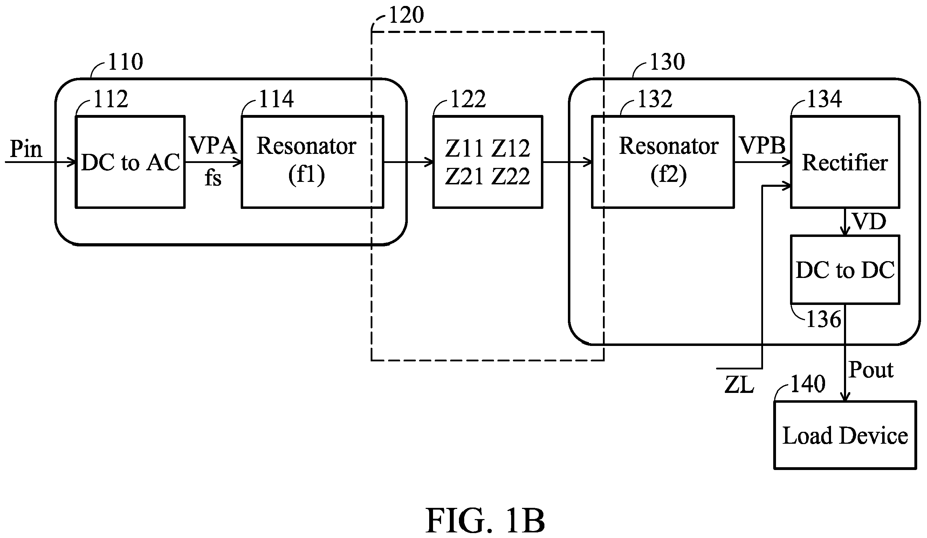

In some embodiments, the PRDU 130 further includes an impedance conversion device coupled between the rectifier 134 and the load device 140, e.g., a DC-to-DC power converter 136 in FIG. 1B. The impedance conversion device is configured to obtain the optimum load resistance RL (i.e., the real part of the load impedance ZL).

The resonator 114 in the PTDU 110 has a resonant frequency f1, and the resonator 132 in the PRDU 130 has a resonant frequency f2. The resonant frequency f1 may be different from the resonant frequency f2. The resonator 114 in the PTDU 110 is driven by the signal VPA from the DC-to-AC power converter 112, and the signal VPA is operating at frequency fs. The PTDU 110 can determine a best operating frequency (or driving frequency) fs for the DC-to-AC power converter 112. In some embodiments, there is no relationship between the frequencies f1 and f2.

In some embodiments, the frequency fs is independent from the frequencies f1 and f2.

When the PTDU 110 is located far away from the PRDU 130, for the wireless power transfer to work properly, a repeater unit (RU) may be used. The RU is configured to receive the power from the PTDU 110 and transmit to the PRDU 130. The RU also supports two-way communications and relays the data between the PTDU 110 and the PRDU 130. In the wireless power transfer system 100, the RU can be omitted when the PRDU 130 is physically located at a less distance from the PTDU 110.

With or without the RU, the efficiency of the power transfer between the PTDU 110 and the PRDU 130 depends on the impedances of a transmitting port (Port 1) and a receiving port (Port 2), and the transfer impedance. The transfer between the PTDU 110 and the PRDU 130, as represented by a box 120, and the impedances can be expressed as follows.

$$Z11 = R11 + jX11$$

$$Z12 = R12 + jX12$$

$$Z21 = R21 + jX21$$

$$Z22 = R22 + jX22$$

wherein

$Z = R + jX$ means Impedance (Z) = Resistance (R) + j*Reactance (X);
Z11= Impedance seen at Port 1, Z12 = transfer impedance from Port 2 to Port 1;
Z22= Impedance seen at Port 2, Z21 = transfer impedance from Port 1 to Port 2;
R11= Resistance seen at Port 1, R12 = transfer Resistance from Port 2 to Port 1;
R22= Resistance seen at Port 2, R21 = transfer Resistance from Port 1 to Port 2;
X11= Reactance seen at Port 1, X12 = transfer Reactance from Port 2 to Port 1; and
X22= Reactance seen at Port 2, X21 = transfer Reactance from Port 1 to Port 2.

The Z matrix above is a general 2-port model 122 and can represent any system. In a general context, the 2-port model 122 represents the PTDU resonator, PRDU resonator and any devices between the PTDU and PRDU resonators (e.g., the RU) Thus, it could mean any circuitry, mechanical housing, air, wood, glass, and other medium between PTDU resonator and PRDU resonator. The Rij, Zij, and Xij represent the equivalent parameter values of the PTDU and PRDU resonators and any device between the PTDU and PRDU resonators (e.g., the RU).

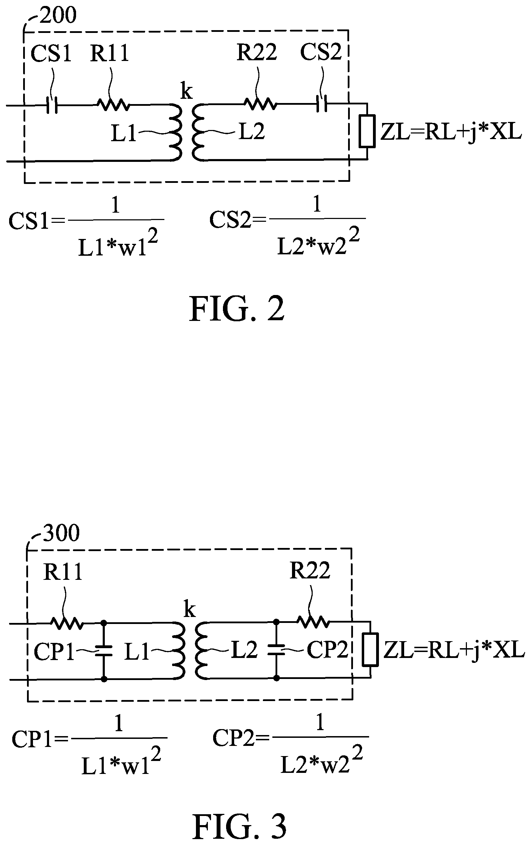

The wireless power transfer between Port 1 in input of the PTDU resonator and Port 2 in output of the PRDU resonator can be simplified by a schematic representation 200 shown in FIG. 2. The schematic representation 200 is known as the "transformer + series capacitor" model. In the schematic representation 200, the PTDU resonator (e.g., the resonator 114 of FIGs. 1A and 1B) includes a primary coil L1 and a resonator capacitor CS1, and the resonator capacitor CS1 and the primary coil L1 are connected in series. Furthermore, the equivalent resistive element in the PTDU resonator is represented as a resistor R11. Moreover, the PRDU resonator (e.g., the resonator 132 of FIGs. 1A and 1B) includes a secondary coil L2 and a resonator capacitor CS2. The resonator capacitor CS2 and the secondary coil L2 are connected in series, and the resonator capacitor CS2 is further connected to the load impedance ZL (ZL=RL+j*XL), where the load resistance RL is the real part of the load impedance ZL and the load reactance XL is the imaginary part of the load impedance ZL. Furthermore, the equivalent resistive element in the PRDU resonator is represented as a resistor R22.

In such embodiment, the capacitance of the resonator capacitor CS1 is obtained according to the inductance of the primary coil L1 and the angular frequency $\omega 1$ of the resonant frequency f1 (e.g., $\omega 1 = 2\pi f1$), i.e.,

$$CS1 = \frac{1}{L1 * \omega 1^2} CS1 = \frac{1}{L1 * \omega 1^2}$$ . Furthermore, the capacitance of the resonator capacitor CS2 is obtained according to the inductance of the secondary coil L2 and the angular frequency $\omega 2$ of the resonant frequency f2 (e.g., $\omega 2 = 2\pi f2$),

i.e., $$CS2 = \frac{1}{L2 * \omega 2^2} CS2 = \frac{1}{L2 * \omega 2^2}$$ .

The optimum angular frequency $\omega 2\_opt$ that results in maximum efficiency in this model can be expressed as equation (1):

$$\omega_2\_opt = \frac{\sqrt{\omega s} \times \sqrt{R11 \times XL + L2 \times R11 \times \omega s - \sqrt{L1} \times \sqrt{L2} \times R12 \times k \times \omega s}}{\sqrt{L1} \times \sqrt{R11}} \qquad (1),$$

where k represents the coupling factor (or called coupling coefficient) between the primary coil L1 and the secondary coil L2, and $\omega s$ is the angular frequency of the operating frequency fs in the PTDU (e.g., the PTDU 110 in FIGs. 1A and 1B), e.g., $\omega s = 2\pi fs$. In such embodiment, the absolute value of the coupling factor k is greater than zero and no more than 1, i.e., $0 < |k| \le 1$. In some embodiments, the absolute value of the coupling factor k is greater than zero and less than 0.9, i.e., $0<|k|<0.9$. In some embodiments, the absolute value of the coupling factor k is greater than 0.9 and no more than 1, i.e., $0.9 < |k| \le 1$.

For the optimum angular frequency $\omega 2$, the efficiency can be shown as equation (2):

$$Eff\_\omega_2 opt = \frac{R11 \times RL \times (R12^2 + L1 \times L2 \times k^2 \times \omega s^2)}{(-R12^2 + R11 \times R22 + R11 \times RL)(L1 \times L2 \times k^2 \times \omega s^2 + R11 \times R22 + R11 \times RL)}$$

$$(2),$$

and the efficiency is function of the load resistance RL along with other design variables.

At the known (or selected) angular frequency $\omega s$ and the coupling factor k, combination of component values (XL, L1, L2, R11, R12) are selected to let the following equation (3) hold:

$$R11 \times XL + L2 \times R11 \times \omega s - \sqrt{L1} \times \sqrt{L2} \times R12 \times k \times \omega s = 0 \qquad (3).$$

Therefore, by substituting equation (3) into equation (1), the optimum angular frequency $\omega 2\_opt$ is equal to zero (e.g., co2_opt=0). In other words, the maximum power transfer efficiency is obtained when the resonator capacitor CS2 is equal to infinity, or equivalently, without the resonator capacitor CS2. In other words, the series resonance frequency (i.e., $\omega 2$) of the PRDU resonator is equal to 0 regardless of whether the series resonance frequency (i.e., $\omega 1$) of the PTDU resonator is not equal to 0.

When the load reactance XL is equal to 0 (e.g., voltage and current of the signal VPB are in phase at input of the rectifier 134), the equation (3) can be further simplified as the equation (4):

$$L2 \times R11 - \sqrt{L1} \times \sqrt{L2} \times R12 \times k = 0 \qquad (4).$$

Therefore, by designating the proper primary coil L1, the secondary coil L2, the resistance R11 and the resistance R12, the power transfer efficiency of all operating frequencies can be maintained for a given coupling factor k without the resonator capacitor CS2.

Furthermore, if the angular frequency $\omega 2$ is equal to the optimum angular frequency $\omega 2\_opt$, whether or not the optimum angular frequency $\omega 2\_opt$ is equal to zero, the optimum load resistance RL (under any given load reactance XL, including the condition of XL=0) for the maximum power transfer efficiency can be expressed as equation (5):

$$RL\_opt\_\omega_2 opt = \frac{\sqrt{R11 \times R22 - R12^2} \sqrt{L1 \times L2 \times k^2 \times \omega^2 + R11 \times R22}}{R11} \qquad (5).$$

Furthermore, the corresponding efficiency can be shown as equation (6):

$$Eff\_RLopt\_\omega_2 opt =$$
$$\frac{R12^2 + L1 \times L2 \times k^2 \times \omega s^2}{2 \times R11 \times R22 + 2\sqrt{R11 \times R22 - R12^2}\sqrt{L1 \times L2 \times k^2 \times \omega s^2 + R11 \times R22} - R12^2 + L1 \times L2 \times k^2 \times \omega s^2}$$

$$(6).$$

In some embodiments, the optimum load resistance RL is obtained by using the impedance conversion device (e.g., the DC-to-DC power converter 136 of FIG. 1B) between the PRDU resonator and the load. In some embodiments, by controlling the pulse width modulation (PWM) operation of the DC-to-DC power converter, the load resistance RL is adjusted, so as to further improve the power transfer efficiency.

The wireless power transfer between Port 1 and Port 2 can be simplified by a schematic representation 300 shown in FIG. 3. The schematic representation 300 is known as "transformer + parallel capacitor" model. In the schematic representation 300, the PTDU resonator (e.g., the resonator 114 of FIGs. 1A and 1B) includes a primary coil L1 and a resonator capacitor CP1. The resonator capacitor CP1 and the primary coil L1 are connected in parallel. Furthermore, the equivalent resistive element in the PTDU resonator is represented as a resistor R11. Moreover, the PRDU resonator (e.g., the resonator 132 of FIGs. 1A and 1B) includes a secondary coil L2 and a resonator capacitor CP2. The resonator capacitor CP2 and the secondary coil L2 are connected in parallel. Furthermore, the equivalent resistive element in the PRDU resonator is represented as a resistor R22.

In such embodiment, the capacitance of the resonator capacitor CP1 is obtained according to the inductance of the primary coil L1 and the angular frequency $\omega 1$ of the resonant frequency f1 (e.g., $\omega 1 = 2\pi f1$), i.e.,

$$CP1 = \frac{1}{L1 * \omega 1^2} CP1 = \frac{1}{L1 * \omega 1^2}$$

. Furthermore, the capacitance of the resonator capacitor CP2 is obtained according to the inductance of the secondary coil L2 and the angular frequency $\omega 2$ of the resonant frequency f2 (e.g., $\omega 2 = 2\pi f2$),

i.e., $$CP2 = \frac{1}{L2 * \omega 2^2} CP2 = \frac{1}{L2 * \omega 2^2}$$ .

In the schematic representation 300, the optimum angular frequency $\omega 2\_opt$ can be expressed as equation (7):

$$\omega 2\_opt = \frac{\sqrt{L2} \times ws \times \sqrt{(R11 \times XL - \sqrt{L1}\sqrt{L2} \times R12 \times k \times \omega s)(R11 \times XL + L2 \times R11 \times \omega s - \sqrt{L1}\sqrt{L2} \times R12 \times k \times \omega s)}}{\sqrt{L1} \times R11 \times XL + \sqrt{L1} \times L2 \times R11 \times ws - L1 \times \sqrt{L2} \times R12 \times k \times ws}$$

(7).

Furthermore, the efficiency can be shown as equation (2). By designating the proper primary coil L1, the secondary coil L2, the resistance R11 and the resistance R12 for a given coupling factor k that satisfies the equation (3) or the equation (4), the optimum angular frequency $\omega 2\_opt$ is equal to infinity. In other words, the maximum power transfer efficiency is obtained when the resonator capacitor CP2 is equal to zero, or equivalently, without the resonator capacitor CP2. Therefore, the parallel resonance frequency (i.e., $\omega 2$) of the PRDU resonator is equal to infinity regardless of whether the parallel resonance frequency (i.e., $\omega 1$) of the PTDU resonator is not equal to infinity.

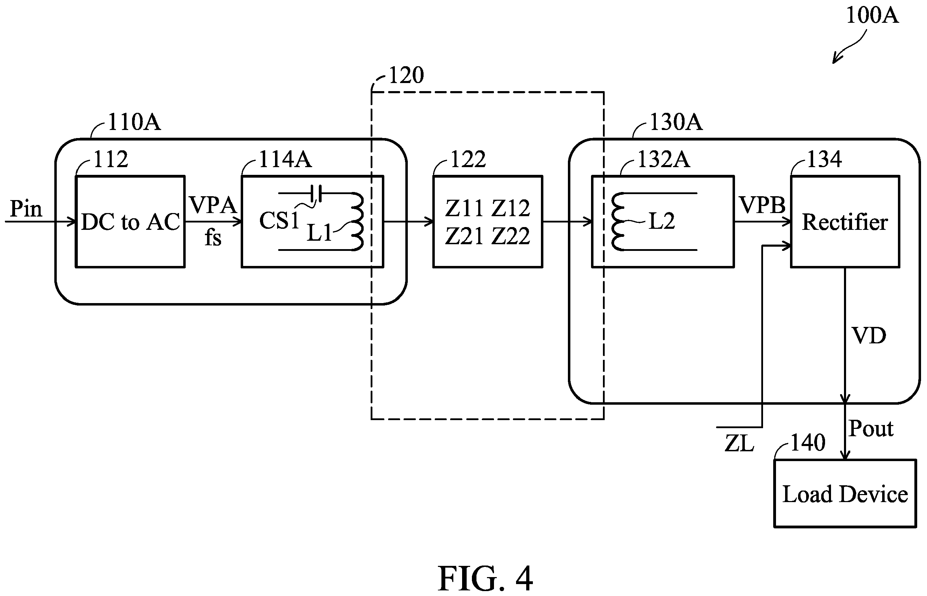

FIG. 4 shows a wireless power transfer system 100A according to some embodiments of the invention. The wireless power transfer system 100A includes the PTDU 110A and the PRDU 130A. In the PTDU 110A, the resonator 114A includes a primary coil L1 and a resonator capacitor CS1 connected in series. In the PRDU 130A, the resonator 132A only includes a secondary coil L2. Compared with the resonator 114A, no resonator capacitor (e.g., the resonator capacitor CS2 in FIG. 2 and the resonator capacitor CP2 in FIG. 3) is present in the resonator 132A. In other words, the secondary coil L2 is directly connected to the rectifier 134. As described above, in the "transformer + series capacitor" model, by selecting the suitable component values to satisfy the equation (3) or the equation (4), the optimum angular frequency $\omega 2\_opt$ is equal to zero, and then the maximum power transfer efficiency is obtained without the resonator capacitor CS2.

In the PTDU 110A, the series resonance frequency $\omega 1$ (i.e., the angular frequency of the resonant frequency f1) may be equal to 0 or not equal to 0. In some embodiments, the series resonance frequency $\omega 2$ (i.e., the angular frequency of the resonant frequency f2) is equal to 0 in the PRDU 130A (i.e., in "transformer + series capacitor" model). In some embodiments, the parallel resonance frequency $\omega 2$ (i.e., the angular frequency of the resonant frequency f2) is close to infinity in the PRDU 130A (i.e., in "transformer + parallel capacitor" model).

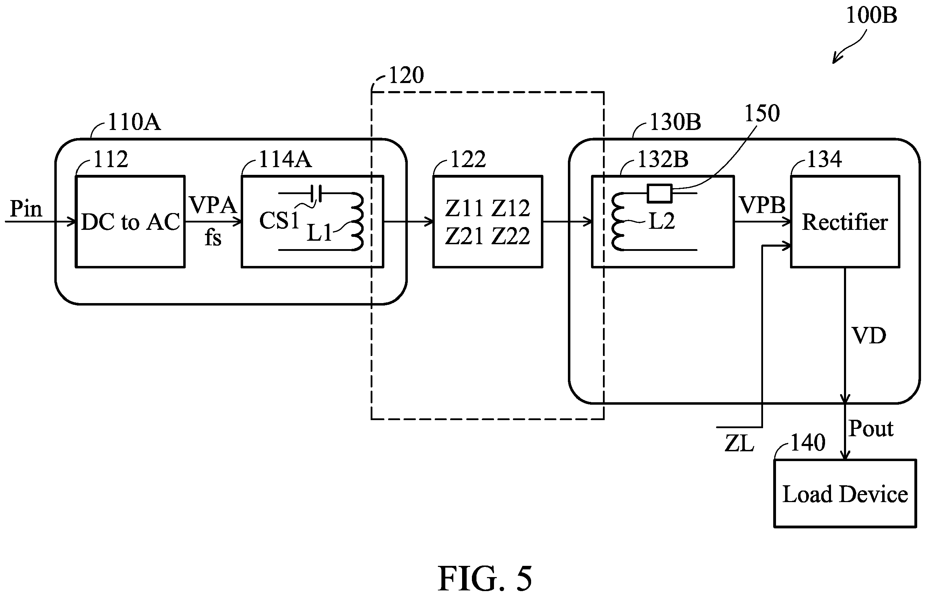

FIG. 5 shows a wireless power transfer system 100B according to some embodiments of the invention. The wireless power transfer system 100B includes the PTDU 110A and the PRDU 130B. The PRDU 130B includes the resonator 132B and the rectifier 134. Compared with the resonator 132A in FIG. 4, the resonator 132B of FIG. 5 further includes a series component 150 (or a series device). In other words, the series component 150 is coupled between the secondary coil L2 and the rectifier 134.

In some embodiments, the series component 150 is formed by one or more passive components, such as the resistor, the capacitor and/or the inductor. Furthermore, the impedance magnitude of the series component 150 is less than one-fifth the impedance magnitude of secondary coil L2 for the operation frequency fs.

In some embodiments, the series component 150 is formed only by the resistor and/or the inductor, i.e., the series component 150 does not include any capacitor. In other words, the resonator 132B is free of a resonator capacitor.

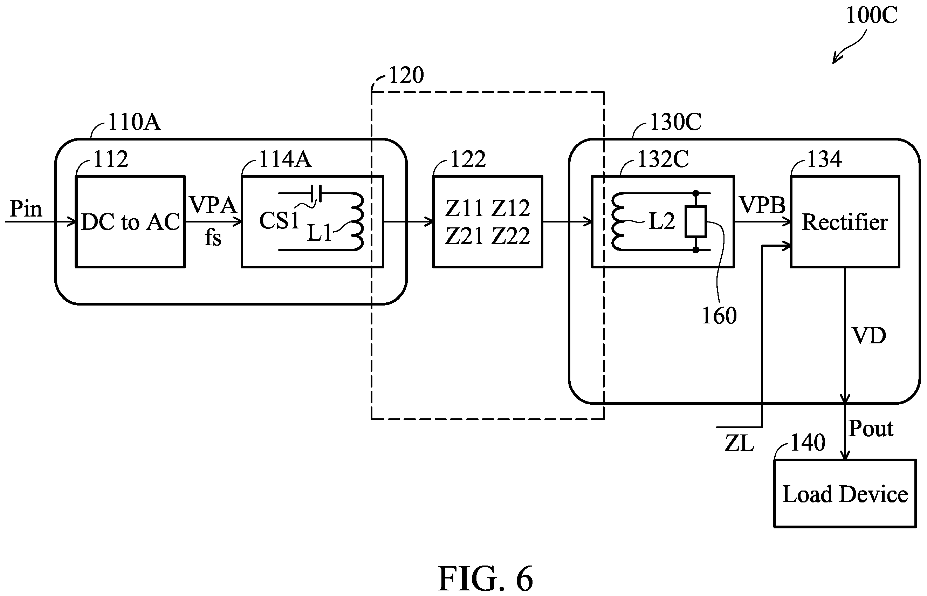

FIG. 6 shows a wireless power transfer system 100C according to some embodiments of the invention. The wireless power transfer system 100C includes the PTDU 110A and the PRDU 130C. The PRDU 130C includes the resonator 132C and the rectifier 134. Compared with the resonator 132A in FIG. 4, the resonator 132C of FIG. 6 further includes a parallel component 160 (or a parallel device). In other words, the parallel component 160 is connected in parallel with the secondary coil L2.

In some embodiments, the parallel component 160 is formed by one or more passive components, such as the resistor, the capacitor and/or the inductor. Furthermore, the impedance magnitude of the parallel component 160 is greater than five times the impedance magnitude of secondary coil L2 for the operation frequency fs.

In some embodiments, the parallel component 160 is formed only by the resistor and/or the inductor, i.e., the parallel component 160 does not include any capacitor. In other words, the resonator 132C is free of a resonator capacitor.

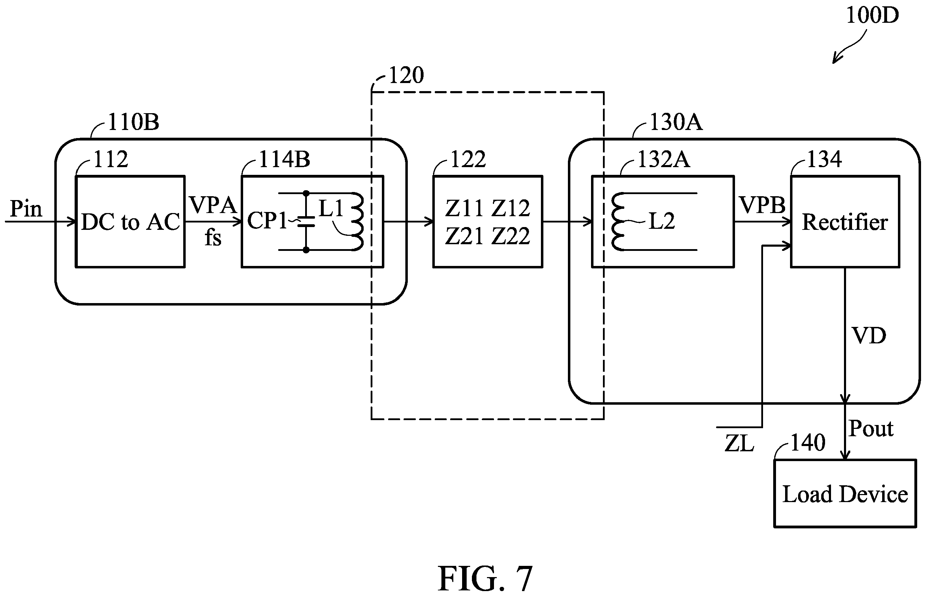

FIG. 7 shows a wireless power transfer system 100D according to some embodiments of the invention. The wireless power transfer system 100D includes the PTDU 110B and the PRDU 130A. In the PTDU 110B, the resonator 114B includes a primary coil L1 and a resonator capacitor CP1 connected in parallel. In the PRDU 130A, the resonator 132A only includes a secondary coil L2. Compared with the resonator 114B, no resonator capacitor (e.g., the resonator capacitor CS2 in FIG. 2 and the resonator capacitor CP2 in FIG. 3) is present in the resonator 132A. In other words, the secondary coil L2 is directly connected to the rectifier 134.

In the PTDU 110B, the parallel resonance frequency $\omega 1$ (i.e., the angular frequency of the resonant frequency f1) may be equal to or not equal to infinity. In some embodiments, the series resonance frequency $\omega 2$ (i.e., the angular frequency of the resonant frequency f2) is equal to 0 in the PRDU 130A (i.e., in "transformer + series capacitor" model). In some embodiments, the parallel resonance frequency $\omega 2$ (i.e., the angular frequency of the resonant frequency f2) is close to infinity in the PRDU 130A (i.e., in "transformer + parallel capacitor" model).

In some embodiments, the PRDU 130A of the wireless power transfer system 100D can be replaced with the PRDU 130B of FIG. 5, wherein the secondary coil L2 is coupled to the rectifier 134 through the series component 150. Furthermore, the impedance magnitude of the series component 150 is less than one-fifth the impedance magnitude of secondary coil L2 for the operation frequency fs.

In some embodiments, the PRDU 130A of the wireless power transfer system 100D can be replaced with the PRDU 130C of FIG. 6, wherein the secondary coil L2 is connected in parallel with the parallel component 160 and the rectifier 134. Furthermore, the impedance magnitude of the parallel component 160 is greater than five times the impedance magnitude of secondary coil L2 for the operation frequency fs.

In some embodiments, no series and/or parallel resonator capacitors are present in the PRDU resonator. In some embodiments, the parallel component or series component with the impedance that has a specific relationship with the impedance of the secondary coil L2 are used in the PRDU resonator. By eliminating the resonator capacitance in the PRDU resonator can remove critical barriers in implementing a low profile wireless power transfer system.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims. It is understood that features shown in different figures and described in different embodiments can be easily combined within the scope of the invention. It is also understood that the components of the system disclosed in this specification may be implemented through a combination of software and hardware. The load described in the present specification may be a smart device or any other electrical apparatus.

Modifications, additions, or omissions may be made to the systems and methods described without departing from the scope of the disclosure. The components of the systems and methods described may be integrated or separated according to particular needs. Moreover, the operations of the systems and methods described may be performed by more, fewer, or other components without departing from the scope of the present disclosure.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

**Claims**

**1.** A system for providing electrical power to a load device (140) through wireless transmission, comprising:

a power transmitting data unit, PTDU, (110) configured to receive an input power, and comprising:

a first resonator (114) configured to provide electromagnetic waves according to the input power; and
a power receiving data unit, PRDU, (130) connected to the load device, and comprising:

a second resonator (132) configured to receive the electromagnetic waves and provide the electrical power according to the electromagnetic waves; and
a rectifier (134) configured to convert the electrical power into a direct current, DC, power to the load device (140),

wherein the first resonator (114; 114A) comprises a primary coil (L1), and the second resonator (132; 132B; 132C) comprises a secondary coil (L2) and a component (150; 160) coupled to the secondary coil,
wherein the secondary coil (L2) has a first impedance magnitude,
wherein when the component (150) is connected between the secondary coil (L2) and the rectifier (134), a second impedance magnitude of the component (150) is less than one-fifth the first impedance magnitude of secondary coil,
wherein when the component (160) is connected in parallel with the secondary coil (L2),

the second impedance magnitude of the component (160) is greater than five times
the first impedance magnitude of secondary coil.

2. The system as claimed in claim 1, wherein the first resonator (114A) further comprises a resonator capacitor (CS1) connected in series with the primary coil (L1).

3. The system as claimed in claim 1, wherein the first resonator (114B) further comprises a resonator capacitor (CP1) connected in parallel with the primary coil (L1).

4. The system as claimed in one of claims 1-3, wherein an absolute value of coupling factor between the primary coil (L1) and the secondary coil (L2)is greater than 0.9, and the absolute value of coupling factor is less than or equal to 1.

5. The system as claimed in one of claims 1-3, wherein an absolute value of coupling factor between the primary coil (L1) and the secondary coil (L2) is greater than zero and less than 0.9.

6. The system as claimed in one of claims 1-5, wherein the power receiving data unit further comprises an impedance conversion device, wherein the impedance conversion device is configured to provide an output power to the load device according to the DC power.

7. The system as claimed in claim 6, wherein the impedance conversion device is a DC-to-DC converter, and the DC-to-DC converter is coupled between the rectifier and the load device.

8. The system as claimed in one of claims 1-7, wherein voltage and current of the electrical power are in phase for the rectifier.

9. The system as claimed in one of claims 1-8, wherein the input power is DC input power, and the power transmitting data unit further comprises a DC to alternating current, DC-to-AC, converter (112), and the DC-to-AC converter is configured to convert the input power to a signal with an operating frequency for driving the first resonator (114).

10. The system as claimed in one of claims 1-9, further comprising:
a repeater unit, RU, arranged between the power transmitting data unit (110) and the power receiving data unit (130).

11. The system as claimed in one of claims 1-10, wherein the component (150; 160) is formed only by a resistor or an inductor.

12. The system as claimed in one of claims 1-11, wherein the second resonator (132) is free of a capacitor.

FIG. 1A

EP 4 270 730 A1

Pin → **DC to AC** (112) — VPA, fs → **Resonator (f1)** (114)

[110]

**Z11 Z12 Z21 Z22** (122)

[120]

**Resonator (f2)** (132) — VPB → **Rectifier** (134) — VD → **DC to DC** (136) — Pout

[130]

ZL

**Load Device** (140)

## FIG. 1B

200

CS1  R11              R22   CS2

k

L1          L2

ZL=RL+j*XL

$$CS1=\frac{1}{L1*w1^2}$$        $$CS2=\frac{1}{L2*w2^2}$$

## FIG. 2

300

R11                      R22

k

CP1   L1        L2   CP2

ZL=RL+j*XL

$$CP1=\frac{1}{L1*w1^2}$$        $$CP2=\frac{1}{L2*w2^2}$$

## FIG. 3

FIG. 4

FIG. 5

EP 4 270 730 A1

**FIG. 6**

FIG. 7

EP 4 270 730 A1

Europäisches
Patentamt

European
Patent Office

Office européen
des brevets

# EUROPEAN SEARCH REPORT

**Application Number**

EP 23 16 5487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAZARO ORLANDO ET AL: "180-nm CMOS Wideband Capacitor-Free Inductively Coupled Power Receiver and Charger", IEEE JOURNAL OF SOLID-STATE CIRCUITS, IEEE, USA, vol. 48, no. 11, 1 November 2013 (2013-11-01), pages 2839-2849, XP011531068, ISSN: 0018-9200, DOI: 10.1109/JSSC.2013.2280053 [retrieved on 2013-10-21] | 1-9,11, 12 | INV. H02J50/12 ADD. H02J50/50 |
| Y | * first paragraph of section "V. Experimental validation"; figures 1,5,13 * | 10 | |
| X | US 2017/338696 A1 (BAE SU HO [KR] ET AL) 23 November 2017 (2017-11-23) * paragraphs [0100], [0112], [0152]; figures 2,3b,4b,9 * | 1-5,8,9 | |
| Y | US 2010/201201 A1 (MOBARHAN RAMIN [US] ET AL) 12 August 2010 (2010-08-12) * figure 22 * | 10 | TECHNICAL FIELDS SEARCHED (IPC) |
| A | ZHAO JIN ET AL: "Design and Analysis of a Flexible Multi-Output Wireless Power Transfer System with Variable Inductor", 2021 IEEE ENERGY CONVERSION CONGRESS AND EXPOSITION (ECCE), IEEE, 10 October 2021 (2021-10-10), pages 1559-1564, XP034020209, DOI: 10.1109/ECCE47101.2021.9595052 [retrieved on 2021-10-29] * abstract; figure 3 * | 1,12 | H02J B60L H01F H04B |

The present search report has been drawn up for all claims

| Place of search | Date of completion of the search | Examiner |
|---|---|---|
| Munich | 20 September 2023 | Varela Fraile, Pablo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 5487

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2023

| Patent document cited in search report | | Publication date | Patent family member(s) | | Publication date |
|---|---|---|---|---|---|
| US 2017338696 | A1 | 23-11-2017 | US 2017338696 | A1 | 23-11-2017 |
| | | | WO 2016093478 | A1 | 16-06-2016 |
| US 2010201201 | A1 | 12-08-2010 | CN 102318211 | A | 11-01-2012 |
| | | | EP 2396895 | A1 | 21-12-2011 |
| | | | JP 5362038 | B2 | 11-12-2013 |
| | | | JP 2012517793 | A | 02-08-2012 |
| | | | KR 20110117697 | A | 27-10-2011 |
| | | | TW 201042879 | A | 01-12-2010 |
| | | | US 2010201201 | A1 | 12-08-2010 |
| | | | WO 2010093721 | A1 | 19-08-2010 |

EPO FORM P0459

For more details about this annex : see Official Journal of the European Patent Office, No. 12/82